(19) Europäisches Patentamt

European Patent Office

Office européen des brevets

(11) **EP 1 443 023 A1**

(12) **EUROPEAN PATENT APPLICATION**

(43) Date of publication:
**04.08.2004 Bulletin 2004/32**

(51) Int Cl.[7]: **C01G 23/04**, C01G 23/053

(21) Application number: **04250493.6**

(22) Date of filing: **29.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.01.2003 JP 2003023914**

(71) Applicant: **Sumitomo Chemical Company, Limited**
**Chuo-ku Osaka 541-8550 (JP)**

(72) Inventors:
• **Yoshida, Yuko**
**Niihama-shi Ehime (JP)**
• **Sakatani, Yoshiaki**
**Niihama-shi Ehime (JP)**

(74) Representative: **Cresswell, Thomas Anthony**
**J.A. KEMP & CO.**
**14 South Square**
**Gray's Inn**
**London WC1R 5JJ (GB)**

(54) **A method for producing titanium oxide**

(57)    A titanium oxide showing photocatalytic activity and having a narrow particle diameter distribution can be produced by a method comprising the steps of (i) inertly heating to a temperature of at least about 60°C, a composition comprising a titanium compound and a solvent; (ii) reacting the titanium compound with a base at a temperature of at least about 60°C; and (iii) calcining the reaction product.

**Description**

Technical Field of the Invention

The present invention relates to a method for producing a titanium oxide. More specifically, the present invention relates to a method for producing a titanium oxide that shows photocatalytic activity and that has a narrow distribution of particle diameter.

Background of the Invention

The photocatalytic properties of titanium oxide have been examined to remove the odor in the atmosphere or to provide self-cleaning properties to windows or walls along the side of a road (for example, Japanese Patent Application Laid-Open No. Hei 9-57912). Typically, the titanium oxide and a solvent are mixed together and are spread to form a film thereof onto car components or building components, such as the road walls or the windows. In addition to the photocatalytic properties, a titanium oxide which also has uniform particle diameter is desired in order to provide the building or car components with an excellent film thereof.

Summary of the Invention

One of objects of the present invention is to provide a method for producing a titanium oxide which has a sufficient photocatalytic activity and has a narrow distribution of particle diameter. The present inventors have studied on titanium oxide and have achieved such an object and other objects.

Thus, the present invention provides a method for producing a titanium oxide, the method comprising the steps of:

(i) inertly heating to a temperature of at least about 60 °C , a composition comprising a titanium compound and a solvent;
(ii) reacting the titanium compound with a base at a temperature of at least about 60 °C; and
(iii) calcining the reaction product.

The present invention also provides a method for producing a titanium hydroxide, comprising the above-mentioned inertly heating of the titanium compound composition and the subsequent reaction thereof.

Detailed Description of the Invention

The present invention provides a method for producing a titanium oxide from a titanium compound as a raw material. The titanium compound can produce a titanium hydroxide when reacted with a base in the presence of water. For example, the titanium compound can be an inorganic titanium compound or organic titanium compound. Examples of the inorganic titanium compound include titanium sulfate ($Ti(SO_4)_2 \cdot mH_2O$, $0 \leqq m \leqq 20$), titanium oxysulfate ($TiOSO_4 \cdot nH_2O$, $0 \leqq n \leqq 20$), titanium trichloride ($TiCl_3$), titanium tertachloride ($TiCl_4$), titanium oxychloride ($TiOCl_2$), titanium tetrabromide ($TiBr_4$) and the like. Examples of the organic titanium compound include titanium tetraalkoxide compounds such as titanium tetramethoxide, titanium tetraethoxide, titanium tetra-n-propoxide, titanium tetra-isopropoxide, titanium tetra-n-butoxide, titanium tetra-isobutoxide, titanium tetra-sec-butoxide, titanium tetra-t-butoxide, titanium tetrakis-2-ethylhexyloxide and titanium tetra-stearyloxide; titanium chelate compounds such as titanium diisopropoxybis(acetylacetonate), titanium diisopropoxybis(triethanolaminato), titanium di-n-butoxybis(triethanolaminato), titanium di (2-ethylhexyloxy)bis(2-ethyl-1,3-hexanediolate), titanium isopropoxy(2-ethylhexanediolate), titanium tetraacetylacetonate and titanium hydroxybis(lactato); and the like. Among them, titanium oyslfate is preferred.

The titanium compound is typically used in a composition comprising the titanium compound and a solvent. In order to prepare the titanium compound composition, the titanium compound is typically mixed with a solvent. The titanium compound composition can be in the form of a solution in which the titanium compound is dissolved in the solvent. Examples of the solvent include aqueous solvents such as water and aqueous hydrogen peroxide; alcohol solvents such as methyl alcohol, ethyl alcohol, isopropyl alcohol, butyl alcohol; ketone solvents such as acetone; and the like. An inorganic titanium compound such as titanium oxysulfate is preferably dissolved in an aqueous solvent, to prepare the titanium compound composition. An organic titanium compound such as titanium tetraisopropoxide is preferably dissolved in an alcohol solvent or a ketone solvent.

The molar amount of the solvent to be used may be at least about 1 time of the molar amount of the titanium compound. Preferably, the molar amount of the solvent is at least about 5 times of the molar amount of the titanium compound. A larger amount of the solvent is preferred, but too large amount of solvent tends to result in a titanium oxide having a wider particle diameter distribution. It is preferred that the molar amount of the solvent is at most about 40 times, more preferably at most about 25 times, of the molar amount of the titanium compound.

Typically, the titanium compound composition is inertly heated to a reaction temperature of at least about 60°C, preferably at least about 80°C, and more preferably at least about 85°C.

In the present invention, "inertly heating a composition" means that the composition is heated in such a way as to suppress the decomposition of the titanium compound in the composition. A low degree of decomposition mentioned below, of a titanium compound in the composition can be achieved, for example, by heating the composition under acidic conditions, preferably at a pH of 3 or lower, to a temperature of no more than 100°C, preferably to a temperature lower than 100°C. In embodiments in which a base precursor is included in the composition, the pH may increase as the base precursor decomposes; however, a low degree of decomposition can still be achieved, for example, by ensuring that the composition has an acidic pH prior to heating, preferably a pH of 3 or lower, and by heating the composition to a temperature of no more than 100°C, preferably to a temperature lower than 100°C. In inertly heating the titanium compound composition, the heating may be conducted at a temperature-rising rate of at least about 5°C/minute, preferably at least about 10°C/minute, and more preferably at least about 15°C/minute.

In inertly heating the titanium compound composition, the titanium compound composition may be heated so that at most about 5% by weight of the titanium compound therein decomposes into a titanium hydroxide before reaching said reaction temperature. Under more stringently inert conditions, which is preferred, the titanium compound composition may be heated so that at most about 1% by weight of the titanium compound therein decomposes into the titanium hydroxide before reaching said reaction temperature.

When the titanium compound in the titanium compound composition decomposes into a titanium hydroxide, the composition tends to become clouded with a white color due to the production of insoluble white titanium hydroxide. Given that a titanium hydroxide generally is insoluble and white, the degree of the decomposition can be measured by the degree of the white turbidity of the composition.

Alternatively, the degree of the decomposition of the titanium compound in the composition can be calculated by dividing the actual weight of the titanium hydroxide that has been produced from the decomposition of the titanium compound, by the theoretically calculated weight of the titanium hydroxide in the same molar amount of the titanium compound utilized to prepare the titanium compound composition, as expressed below in equation (1):

$$
\begin{array}{l}
\text{Decomposition} \\
\text{degree} \\
\text{(\%by weight)}
\end{array}
=
\frac{\text{Actual weight of the titanium hydroxide}}{\begin{array}{l}\text{Theoretical weight of the titanium hydroxide}\\\text{produced from the utilized titanium compound}\end{array}}
\times 100
$$

$$(1)$$

The calculation may entail sampling the titanium compound composition closely before or at reaching said reaction temperature. The sample can be utilized to determine the actual weight of the decomposing titanium compound in the titanium compound composition as follows:

The sample of the titanium compound composition is dispersed into a solvent (such as water) in which the titanium compound therein can be dissolved. The mixture of the sample with the solvent was filtrated to obtain a solid therein, followed by being dried at about 100 °C . The resulting dried solid is regarded to be composed of the actually produced titanium hydroxide and the solvent, since the titanium compound in the sample has dissolved to be isolated into a filtrate. After the weights of the dried solid and the solvent contained in the solid are obtained, respectively, the weight of the titanium hydroxide in the solid can be determined by subtracting the solvent weight from the dried solid weight. It is noted that the solvent weight can be obtained from the concentration thereof in the dried solid, the concentration being measured in known manners. For example, when the solvent is water, the concentration of water in the dried solid can be measured with thermogravimetry and differential thermal analysis (TG-DTA).

The titanium compound composition can be inertly heated to the reaction temperature with a dual layered pipe having inner and outer pipes. The titanium compound composition can be supplied into the inner pipe, while a heating medium can be supplied into the outer pipe. Alternatively, the titanium compound composition can be inertly heated with a container that is equipped with a stirrer. Into the container, the titanium compound composition can be supplied while being stirred and heated with a heating medium.

In the present invention, the titanium compound in such a heated titanium compound composition may react with a base in the present of water. Examples of the base include a hydroxide of alkali metal, a hydroxide of alkaline earth metal, an ammonia and an amine.

Examples of the hydroxide of alkali metal include a sodium hydroxide, a potassium hydroxide and a lithium hydroxide. Examples of the hydroxide of alkaline earth include a calcium hydroxide. Examples of the amine include a hydroxylamine. The above-described base may be utilized alone, or in combination of two or more kinds of them. Among the above-described base, ammonia is preferably utilized.

The reaction of the titanium compound with the base may be conducted at a temperature of at least about 60 °C, preferably at a temperature of at least about 80 °C, and more preferably at a temperature of at least about 85 °C. The period of time for the reaction may be at least about 0.1 hours, preferably at least about 0.5 hours and may be at most about 60 hours, preferably at most about 24 hours.

The reaction may be conducted in the presence of water. The amount of water needed for the reaction may be about 30 % by weight, is preferably about 40 % by weight, based on the titanium compound.

The base can be provided for the reaction in at least two ways. First, the base itself (together with an optional solvent) may be mixed with the titanium compound composition at the reaction temperature. Second, the titanium compound and the solvent for the composition is mixed with a base precursor of said base before heating, and then the resulting mixture is heated to the reaction temperature.

When the base itself (together with an optional solvent) is mixed with the titanium compound composition, the base is typically mixed with the titanium compound composition after the composition has been heated to the reaction temperature.

The base can be utilized in the form of an aqueous solution thereof. It is preferable to utilize the aqueous solution of the base, when the solvent in the titanium compound composition is a solvent other than the aqueous solvent, such as the alcohol solvent and the ketone solvent.

The mixing can be conducted in a manner such that a titanium compound composition and a solution of the base are heated respectively in dual layered pipes, and then the titanium compound composition and the base solution are supplied into a reaction tube connected with the dual layered pipes. Alternatively, the mixing can be conducted in a manner such that a titanium compound and a solvent for the composition is mixed with a base precursor of said base before heating, then the resulting mixture is heated to the reaction temperature, resulting in mixing the titanium compound with the generated base at the reaction temperature.

The molar amount of the base to be used in the reaction is at least the theoretical molar amount thereof employed in modifying or converting the titanium compound in the titanium compound composition to a titanium hydroxide. For example, when 1 mole of a titanium sulfate reacts with an ammonia, the theoretical molar amount of the ammonia employed in modifying such a titanium compound to a titanium hydroxide is 4 moles. Preferably, the base is used in a molar amount of at least about 2 times of said theoretical molar amount thereof employed in modifying the titanium compound to a titanium hydroxide. Further, it is preferable that the molar amount of the base is at most about 40 times, more preferably at most about 20 times, of said theoretical molar amount.

When a base precursor is utilized for providing the base, the base precursor may be mixed with the titanium compound and the solvent, before heating the resulting mixture to said reaction temperature. It is preferred that the base precursor is a compound that decomposes into ammonia or an amine when heated.

Examples of the base precursor of the ammonia include urea, thiourea, dimethylurea, urea peroxide, and the like.

In a preferable method of the present invention, the base precursor that decomposes into the ammonia at a temperature of at least about 80 °C under atmospheric pressure is utilized and the subsequent reaction is conducted at a temperature of at least about 80 °C . Examples on such a preferable base precursor include urea. In a preferable method of the present invention, for example, the urea decomposes in a composition containing a titanium compound and water as a solvent, when heated to a temperature of at least about 80 °C , preferably to a temperature of at least about 85 °C.

The decomposition of urea can be expressed below in formula (I):

$$NH_2CONH_2 + 3H_2O \rightarrow 2NH_3 \cdot H_2O + CO_2 \tag{I}$$

As indicated in formula (I), 1 mole of the urea produces 2 moles of the ammonia in the decomposition thereof. Such a produced ammonia can react with a titanium compound in the presence of water.

The above-described reaction can be explained in more detail below. In water, the produced ammonia breaks down into an ammonium ion and a hydroxide ion, as expressed below in formula (II):

$$NH_3 \cdot H_2O \rightarrow NH_4^+ + OH^- \tag{II}$$

The resulting ammonium ion can react with an acid group which has been provided from the titanium compound to result in a salt, while the resulting hydroxide ion can react with a titanium ion from the titanium compound to result in a titanium hydroxide, which is useful for producing the titanium oxide of the present invention. For example, when the titanium compound is titanium oxysulfate or titanium sulfate, the reactions can be expressed as below in formulas (III) and (IV):

$$2SO_4{}^{2-} + 4NH_4 + \rightarrow 2(NH_4)_2SO_4 \qquad \text{(III)}$$

$$Ti^{4+} + 4OH^- \rightarrow Ti(OH)_4 \qquad \text{(IV)}$$

Since 1 mole of titanium sulfate breaks down into 2 mole of $SO_4{}^{2-}$ and 1 mole of $Ti^{4+}$, the theoretical molar amount of the ammonia for reacting with 1 mole of the titanium sulfate is 4 moles, which is equivalent to 2 moles of urea as a base precursor. Similarly, since 1 mole of titanium oxysulfate breaks down into 1 mole of $SO_4{}^{2-}$ and 1 mole of $Ti^{4+}$, the theoretical molar amount of the ammonia for reacting with 1 mole of the titanium oxysulfate is 2 moles, which is equivalent to 1 moles of urea as a base precursor.

When the base precursor of the ammonia is utilized to provide an ammonia for reacting with the inertly heated titanium compound in the present invention, the molar amount of the base precursor to be utilized is at least the theoretical molar amount thereof employed in modifying or converting the titanium compound in the titanium compound composition to a titanium hydroxide. Preferably, the base precursor is utilized in a molar amount of at least about 2 times of said theoretical molar amount.

The reaction product resulting from reacting the heated titanium compound with the base can be aged, if needed. The reaction product may be aged at a temperature of at least about 20 °C , and is preferably aged at a temperature of at least about 30 °C. Further, the reaction product can be aged at a temperature of at most about 55 °C, and is preferably aged at a temperature of at most about 50 °C. The period of time for the aging may be at least about 0.5 hour and at most about 10 hours.

The solid in the reaction product may be separated from the liquid therein, if necessary after the aging. Examples of techniques employed for separating the solid from the liquid include pressure filtration, vacuum filtration, centrifuge, decantation and the like. The recovered solid can be washed and dried, if needed. For example, the solid can be washed with water, an aqueous solution of hydrogen peroxide, an ammonia water, an aqueous solution of oxalic acid, an aqueous solution of nitric acid, an aqueous solution of ammonium nitrate or an aqueous solution comprising an amine or the like. The solid can be dried, for example, by utilizing a flash dryer, a flowing heat dryer, a static dryer, a spray dryer and the like.

The reaction product, the aged reaction product or the recovered solid is calcined to produce the titanium oxide. The calcination can be carried out using a furnace such as a pneumatic conveying furnace, a tunnel furnace, a rotary furnace and the like. The calcination can occur in an environment containing air, steam, nitrogen gas, rare gas, ammonia gas or the like. The calcination temperature may be at least about 300 °C , and is preferably at least about 350 °C . Further, the calcaination temperature may be at most about 800 °C, and is preferably at most about 600 °C. The period of time for calcination changes depending on the calcination environment, the type of furnace and the calcination temperature. Such a calcination time may be at least about 0.1 hour and at most about 30 hours.

The titanium oxide produced by the method in the present invention may have an average particle diameter of at most about 15 $\mu$m, and may have a standard deviation of the particle diameter distribution of about at most about 5. The titanium oxide also may have a crystallization structure of anatase and shows photocatalytic activity.

As described above, in accordance with the present invention, titanium oxide particles showing photocatalytic activity and having a narrow particle diameter distribution can be produced.

The invention being thus described, it will be apparent that the same may be varied in many ways. Such variations are to be regarded as within the spirit and scope of the invention, and all such modifications as would be apparent to one skilled in the art are intended to be within the scope of the following claims.

The entire disclosure of the Japanese Patent Application No. 2003-23914 filed on January 31, 2003 indicating specification, claims and summary, are incorporated herein by reference in their entirety.

Examples

The present invention is described in more detail by following Examples, which should not be construed as a limitation upon the scope of the present invention. The average particle diameter, standard deviation of the particle diameter distribution and the crystallization structure were measured by the following methods.

Average particle diameter $D_{50}$ (μm) and standard deviation of the particle diameter distribution SD(μm):

The test particles were dissolved in a 0.2 % by weight aqueous solution of sodium hexametaphosphate. The resulting solution is inserted into a particle size analyzer Microtrac HRA model 9320-X100 (manufactured by Nikkiso Company). The particle diameter distribution of the test particles was measured in the condition where the measurement range thereof was 0.1 μm to 700 μm, and the number of partitions of the measurement range was 100. The accumulated diameter of 50 % by volume was calculated with the resulting particle diameter distribution. The calculated value was designated as the average particle diameter $D_{50}$. Further the standard deviation SD was calculated with the following equation:

$$SD = \sqrt{\sum_{i=1}^{100}(D_i - D_{50})^2 \times P_i}$$

wherein $D_i$ represents an arbitrary particle diameter in the particle distribution and $P_i$ represents the volumetric fraction in the arbitrary particle diameter $D_i$.

Crystallization Structure:

The crystallization structure was measured with the X ray diffraction device RAD-IIA (manufactured by Rigaku Corporation).

Example 1

An aqueous solution of an titanium oxysulfate was prepared by dissolving 204 g of a titanium oxysulfate (product name of "TM crystal", white solid, produced by Tayca Corporation) in 136 g of water. A hundred twenty six grams (126 g) of water, 202 g of an urea (extra-pure reagent, produced by Wako Pure Chemicals Industries) and 340 g of the above-prepared titanium oxysulfate solution were added into a 1L flask equipped with a stirrer. The stirrer was spun at . 400 rpm for 5 minutes to dissolve the urea. The resulting mixture was at a temperature of 21.6 °C and had a pH value of 1. The molar amount of the added water was 17.3 times of the molar amount of the titanium oxysulfate. The molar amount of the urea was 4 times of the theoretical molar amount for converting the titanium oxysulfate to a titanium hydroxide.

While mixing the above mixture, the mixture was heated at a rate of 5 °C/minute. The mixture was heated by utilizing a 100 °C oil bath. The mixture started to turn insolubly white to be a slurry when the temperature of the mixture reached 95°C. Subsequently, the resulting slurry was stirred at 100 °C for 3 hours. The mixture after being stirred for 3 hours had a pH value of 6.9.

While further stirring the slurry, the slurry was cooled to 40 °C. The slurry after being cooled had a pH value of 8.2. Subsequently, the slurry was maintained for aging at 40 °C for 1 hour. The solid in the obtained slurry was filtered, washed and dried.

Evaluation of separability of the solid from the slurry:

The separability of the solid from the slurry was evaluated with a simple device consisting of an aspirator (model no. "A-3S", manufactured by Tokyo Rikagaku Co., Ltd.) and a strainer to which filter paper (model no. "125 mm No. 5C", manufactured by Advantec Co., Ltd.) was attached. Ten (10) seconds was needed to filter 0.2 L of the slurry. Such a short period of time for filtration proves that the solid has particles with a relatively large particle size, which corresponds to a narrow distribution of particle size.

The dried solid obtained above was calcined in air at 400 °C for 1 hour to produce a titanium oxide. The titanium oxide had an average particle diameter of 11.9 μm, a standard deviation of particle diameter distribution of 4.3 and an anatase crystallization structure.

Evaluation of the titanium oxide activity:

In a sealed-type glass container (diameter: 8 cm, height: 10 cm, volume: about 0.5 L), was placed a 5-cm diameter glass Petri dish on which 0.3g of the above obtained titanium oxide was placed. The container was filled with a mixed gas having an oxygen content of 20 % by volume and a nitrogen content of 80 % by volume, was sealed with 13.4 µmol of acetoaldehyde and was then irradiated with visible light from outside of the container. The visible light irradiation was carried out using a light source device (manufactured by USHIO INC., trade name: Optical Modulex SX-UI500XQ) which is equipped with a 500 W xenon lamp (manufactured by USHIO INC., trade name: Lamp UXL-500SX), an ultraviolet cutting filter (manufactured by Asahi Techno Glass Co., Ltd., trade name: Y-45) cutting off ultraviolet light having a wavelength of about 430 nm or shorter and an infrared light cutting filter (manufactured by USHIO INC., trade name: Supercold Filter) cutting off infrared light having a wavelength of about 830 nm or longer. The photocatalytic activity of the titanium oxide was evaluated by measurement of a concentration of carbon dioxide, that is the product from the decomposition of acetoaldehyde due to the irradiation of visible light. The carbon dioxide concentration was measured using a photoacoustic multigas monitor (Model: 1312, manufactured by INNOVA) with the passage of time. The producing rate of carbon dioxide was 10.4 µmol/h per one gram of the titanium oxide.

Example 2

An aqueous solution of an titanium oxysulfate was prepared by dissolving 204 g of a titanium oxysulfate (product name of "TM crystal", white solid, produced by Tayca Corporation) in 136 g of water. A hundred twenty six grams (126g) of water, 404 g of an urea (extra-pure reagent, produced by Wako Pure Chemicals Industries) and 340 g of the above-prepared titanium oxysulfate solution were added into a 1L flask equipped with a stirrer. The stirrer was spun at 400 rpm for 5 minutes to dissolve the urea. The resulting mixture was at a temperature of 18.5 °C and had a pH value of 1.8. The molar amount of the added water was 17.3 times of the molar amount of the titanium oxysulfate. The molar amount of the urea was 8 times of the theoretical molar amount for converting the titanium oxysulfate to a titanium hydroxide.

While mixing the above mixture, the mixture was heated at a rate of 5 °C/minute. The mixture was heated by utilizing a 100 °C oil bath. The mixture started to turn insolubly white to be a slurry when the temperature of the mixture reached 100 °C. Subsequently, the resulting slurry was stirred at 100 °C for 3 hours. The mixture after being stirred for 3 hours had a pH value of 7.3.

While further stirring the slurry, the slurry was cooled to 40 °C. The slurry after being cooled had a pH value of 8.7. Subsequently, the slurry was maintained for aging at 40 °C for 1 hour. The solid in the obtained slurry was filtered, washed and dried.

The dried solid obtained above was calcined in air at 400 °C for 1 hour to produce a titanium oxide. The titanium oxide had an average particle diameter of 4.2 µm, a standard deviation of particle diameter distribution of 1.8 and an anatase crystallization structure.

The photocatalytic activity of the titanium oxide was examined under conditions similar to that described in "Evaluation of the titanium oxide activity" of Example 1. The production speed of the carbon dioxide in this Example was 6.9 µmoles/hour per 1 g of the titanium oxide.

Example 3

A titanium oxide was produced in the same manner as in Example 2 except that the heating rate of the mixture was changed from 5 °C /minute to 16 °C/minute. The resulting titanium oxide had an average particle diameter of 2.3 µm, the standard deviation of the particle diameter distribution of 1 and the crystallization structure of anatase.

The photocatalytic activity of the titanium oxide was examined under conditions similar to that described in "Evaluation of the titanium oxide activity" of Example 1. The production speed of the carbon dioxide in this Example was 8.8 µmoles/hour per 1 g of the titanium oxide.

Comparative Example 1

An aqueous solution of an titanium oxysulfate was prepared by dissolving 68 g of a titanium oxysulfate (product name of "TM crystal", white solid, produced by Tayca Corporation) in 272 g of water. The titanium oxysulfate solution was added into a 1L flask equipped with a stirrer. While stirring the aqueous solution therein at 400 rpm, the solution was heated at a rate of 5°C /minute. When the temperature of the aqueous solution was heated to 90 °C, the aqueous solution turned white. Subsequently, the resulting slurry was stirred at 100 °C for 3 hours. While stirring the slurry, the slurry was cooled to 40°C.

The slurry was examined under the conditions described in "Evaluation of separability of the solid from the slurry" of Example 1. Two (2) hours was needed to filter 0.2 L of the slurry.

The solid in the obtained slurry was filtered, washed and dried. The dried solid was calcined in air at 400 °C for 1 hour to produce a titanium oxide. The titanium oxide had the average particle diameter of 15.8 µm, the standard deviation of the particle diameter distribution of 12 and a crystallization structure of anatase.

The photocatalytic activity of the titanium oxide was examined under conditions similar to that described in "Evaluation of the titanium oxide activity" of Example 1. The production speed of carbon dioxide in this Example was 0 μmole/hour per 1g of the titanium oxide.

**Claims**

1. A method for producing a titanium oxide, the method comprising the steps of:

   (i) inertly heating to a temperature of at least about 60°C, a composition comprising a titanium compound and a solvent;
   (ii) reacting the titanium compound with a base at a temperature of at least about 60°C; and
   (iii) calcining the reaction product.

2. A method according to claim 1, wherein the titanium compound is at least one compound selected from a titanium sulfate, a titanium oxysulfate, a titanium trichloride, a titanium tetrachloride, a titanium oxychloride, a titanium tetrabromide, a titanium tetra-alkoxide and a titanium chelate.

3. A method according to claim 2, wherein the titanium tetra-alkoxide is at least one compound selected from a titanium tetramethoxide, a titanium tetraethoxide, a titanium tetra-n-propoxide, a titanium tetra-isopropoxide, a titanium tetra-n-butoxide, a titanium tetra-isobutoxide, a titanium tetra-sec-butoxide, a titanium tetra-t-butoxide, a titanium tetra-2-ethylhexyloxide and a titanium tetra-stearyloxide.

4. A method according to claim 2, wherein the titanium chelate is at least one compound selected from a titanium diisopropoxybis(acetylacetonate), a titanium diisopropoxybis(triethanolaminato), a titanium di-n-butoxybis(triethanolaminato), a titanium di(2-ethylhexyloxy)bis(2-ethyl-1,3-hexanediolate), a titanium isopropoxy(2-ethyl-1,3-hexanediolate), a titanium tetraacetylacetonate and titanium hydroxybis(lactato).

5. A method according to claim 1, wherein the titanium compound is a titanium oxysulfate.

6. A method according to any one of claims 1 to 5, wherein the base is at least one base selected from a hydroxide of alkali metal, a hydroxide of alkaline earth metal, an ammonia and an amine.

7. A method according to claim 6, wherein the base is at least one base selected from a sodium hydroxide, a potassium hydroxide, a lithium hydroxide, an ammonia and a hydroxylamine.

8. A method according to claim 7, wherein the base is an ammonia.

9. A method according to any one of claims 1 to 8, wherein the base is used in at least the molar amount needed to theoretically convert the titanium compound to a titanium hydroxide.

10. A method according to claim 1, comprising the steps of:

    (i) inertly heating to a temperature of at least about 60°C, a composition comprising a titanium compound, a solvent and a base precursor of said base;
    (ii) maintaining the heating temperature or further heating the composition so that the base precursor decomposes into said base, to react the titanium compound with said base; and
    (iii) calcining the reaction product.

11. A method according to claim 1, comprising the steps of:

    (i) inertly heating to a temperature of at least about 60°C, a composition comprising a titanium compound, a solvent and a base precursor of said base;
    (ii) reacting the titanium compound, at a temperature of at least about 60°C, with said base into which the base precursor decomposes; and
    (iii) calcining the reaction product.

12. A method according to claim 10 or 11, wherein the base precursor is at least one compound selected from a urea, a thiourea, a dimethylurea and a urea peroxide.

**EP 1 443 023 A1**

**13.** A method according to any one of claims 1 to 12, wherein the calcination is conducted at a temperature of about 300°C to about 800°C.

**14.** A method according to claim 13, wherein the calcination is conducted at a temperature of about 350°C to about 600°C.

**15.** A method according to any one of claims 1 to 14, wherein the reaction is conducted in the presence of water.

**16.** A method of producing a titanium hydroxide, the method comprising the steps of:

(i) inertly heating to a temperature of at least about 60°C, a composition comprising a titanium compound and a solvent; and
(ii) reacting the titanium compound with a base at a temperature of at least about 60°C.

**17.** A method according to claim 16, wherein the reaction is conducted in the presence of water.

**18.** A method according to claim 16 or 17, wherein the base is at least one base selected from a hydroxide of alkali metal, a hydroxide of alkaline earth metal, an ammonia and an amine.

**19.** A method according to claim 18, wherein the base is at least one base selected from a sodium hydroxide, a potassium hydroxide, a lithium hydroxide, an ammonia and a hydroxylamine.

**20.** A method according to claim 19, wherein the base is an ammonia.

**21.** A method according to claim 16 or 17, comprising the steps of:

(i) inertly heating to a temperature of at least about 60°C, a composition comprising a titanium compound, a solvent and a base precursor of said base;
(ii) maintaining the heating temperature or further heating the composition so that the base precursor decomposes into said base, to react the titanium compound with said base.

**22.** A method according to claim 16 or 17, comprising the steps of:

(i) inertly heating to a temperature of at least about 60°C, a composition comprising a titanium compound, a solvent and a base precursor of said base;
(ii) reacting the titanium compound, at a temperature of at least about 60°C, with said base into which the base precursor decomposes.

**23.** A method according to claim 21 or 22, wherein the base precursor is at least one compound selected from a urea, a thiourea, a dimethylurea and a urea peroxide.

9

**European Patent Office**

## EUROPEAN SEARCH REPORT

Application Number

EP 04 25 0493

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | WO 03/048048 A (RAESAENEN LEA ;NAKATSUJI TADAO (FI); KEMIRA PIGMENTS OY (FI)) 12 June 2003 (2003-06-12) * claims 1-4,11 * * page 2, line 34 - page 3, line 29 * * page 6, line 25-29 * * examples * | 1,2,6-8, 13-19 | C01G23/04 C01G23/053 |
| X | EP 1 178 011 A (SUMITOMO CHEMICAL CO) 6 February 2002 (2002-02-06) * claims 1,3,5 * * paragraphs [0004]-[0015] * * paragraphs [0020],[0021] * * examples * | 1-3,5-9, 13-20 | |
| X | US 5 011 674 A (YOSHIMOTO MASAFUMI ET AL) 30 April 1991 (1991-04-30) * the whole document * | 1,2,6-8, 13-20 | |
| X | WO 99/43616 A (MIRSKY YAACOV W ;ROTEM AMFERT NEGEV LTD (IL); GORLOVA MARINA N (RU) 2 September 1999 (1999-09-02) * page 4, line 4-11 * * page 6, line 29 - page 8, line 17 * * page 10, line 18-30 * | 10-12, 21-23 | TECHNICAL FIELDS SEARCHED (Int.Cl.7) C01G |

The present search report has been drawn up for all claims

| Place of search | Date of completion of the search | Examiner |
|---|---|---|
| MUNICH | 13 April 2004 | Rhodes, K |

EPO FORM 1503 03.82 (P04C01)

## ANNEX TO THE EUROPEAN SEARCH REPORT
## ON EUROPEAN PATENT APPLICATION NO.

EP 04 25 0493

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2004

| Patent document cited in search report | | Publication date | Patent family member(s) | | Publication date |
|---|---|---|---|---|---|
| WO 03048048 | A | 12-06-2003 | FI<br>WO | 20012397 A<br>03048048 A1 | 06-06-2003<br>12-06-2003 |
| EP 1178011 | A | 06-02-2002 | JP<br>AU<br>CA<br>CN<br>EP<br>US<br>JP | 2002047012 A<br>3140401 A<br>2342665 A1<br>1336326 A<br>1178011 A1<br>2003068268 A1<br>2002249319 A | 12-02-2002<br>07-02-2002<br>31-01-2002<br>20-02-2002<br>06-02-2002<br>10-04-2003<br>06-09-2002 |
| US 5011674 | A | 30-04-1991 | JP<br>JP<br>JP<br>US | 1301518 A<br>1814428 C<br>5024866 B<br>5169619 A | 05-12-1989<br>18-01-1994<br>09-04-1993<br>08-12-1992 |
| WO 9943616 | A | 02-09-1999 | WO<br>AU<br>EP | 9943616 A1<br>6228398 A<br>1060128 A1 | 02-09-1999<br>15-09-1999<br>20-12-2000 |

EPO FORM P0459

For more details about this annex : see Official Journal of the European Patent Office, No. 12/82